# FASCICULE DE BREVET EUROPEEN

(11) **EP 0 558 397 B1**
(45) Date de publication et mention de la délivrance du brevet: **13.11.1996**
(21) Numéro de dépôt: 93400457.3
(22) Date de dépôt: 23.02.1993
(51) Int. Cl.: B60H 1/00

(54) **Dispositif d'admission de l'air de chauffage et de ventilation avec recyclage de l'air de l'habitacle d'un véhicule**
Lufteinlass für eine Fahrzeugheizungs- und Belüftungsvorrichtung mit Luftumwälzung
Air intake device for heating and ventilation with air recirculation from the passenger compartment of a vehicle

(30) Priorité: 28.02.1992 FR 9202344
(43) Date de publication de la demande: 01.09.1993
(73) Titulaire: REGIE NATIONALE DES USINES RENAULT S.A., 92109 Boulogne Billancourt (FR)
(72) Inventeur: Daniel, Yves, F-92500 Rueil Malmaison (FR); Freytrich, Jean-Pierre, F-92130 Issy-les-Moulineaux (FR); Colinet, André, F-92800 Puteaux (FR)
(74) Mandataire: Ernst-Schonberg, Michel

(56) Documents cités:
- EP-A- 0 111 279
- GB-A- 2 083 610
- GB-A- 2 155 171
- US-A- 4 802 405
- PATENT ABSTRACTS OF JAPAN vol. 10, no. 191 (M-495)(2247) 4 Juillet 1986 & JP-A-61 036 014 (SUZUKI MOTOR)

## Description

L'invention concerne un dispositif d'admission de l'air de chauffage et de ventilation avec recyclage de l'air de l'habitacle d'un véhicule, du type comportant un boîtier d'admission de l'air, dans lequel est disposé un ventilateur débitant un flux d'air dans une gaine d'alimentation d'un distributeur d'air, un volet d'admission de l'air extérieur et un volet de recyclage, de l'air de l'habitacle respectivement commandés à distance par une commande disposée dans l'habitacle, conformément au préambule de la revendication indépendante.

La publication US-A-4802405 décrit un dispositif d'admission de l'air de chauffage et de ventilation avec recyclage de l'air de l'habitacle conforme au préambule de la revendication indépendante.

Dans ce dispositif le système de volets d'admission de l'air extérieur est réalisé à partir de deux volets de recirculation 5, 6 commandés à distance.

La publication JP-A-61-36014 décrit une commande d'enclenchement d'un motoventilateur à partir de la position d'un volet de distribution d'air.

Lorsque le véhicule circule dans un environnement pollué il est important d'isoler temporairement l'habitacle de l'air extérieur en assurant une circulation dynamique de l'air recyclé sans risque d'accroissement du taux d'humidité de l'air dans l'habitacle et les inévitables dépôts de buée sur les vitres du véhicule.

Conformément à l'invention le problème est résolu en ce que le volet de recyclage et le volet d'admission sont respectivement disposés dans des chambres en communication avec une volute du ventilateur dans laquelle débouche la gaine d'alimentation d'un boîtier du distributeur de l'air de chauffage et de ventilation et en ce que la commande d'ouverture dudit volet de recyclage actionne le ventilateur.

Le dispositif ainsi réalisé permet notamment d'accélérer le réchauffage de l'air de l'habitacle en le recyclant en totalité ou partiellement au travers d'un échangeur thermique disposé dans le boîtier du distributeur de l'air de chauffage et de ventilation.

D'autres caractéristiques et avantages de l'invention apparaîtront à la lecture de la description d'un exemple de réalisation du dispositif d'admission de l'air de chauffage et de ventilation avec recyclage de l'air de l'habitacle, en référence au dessin annexé dans lequel :
- la figure 1 est une représentation schématique d'un dispositif de chauffage et de ventilation comportant le dispositif répartiteur d'air de chauffage et de ventilation avec recyclage de l'air de l'habitacle.
- les figures 2, 3, 4 sont des représentations schématiques du dispositif d'admission de l'air de chauffage et de ventilation respectivement dans les configurations
   de fermeture totale de l'admission, ventilateur à l'arrêt (figure 2)
   d'admission maximale de l'air extérieur et circulation forcée de l'air vers le dispositif distributeur de l'air (figure 3)
   d'admission de l'air recyclé et circulation forcée de l'air vers le dispositif distributeur (figure 4),

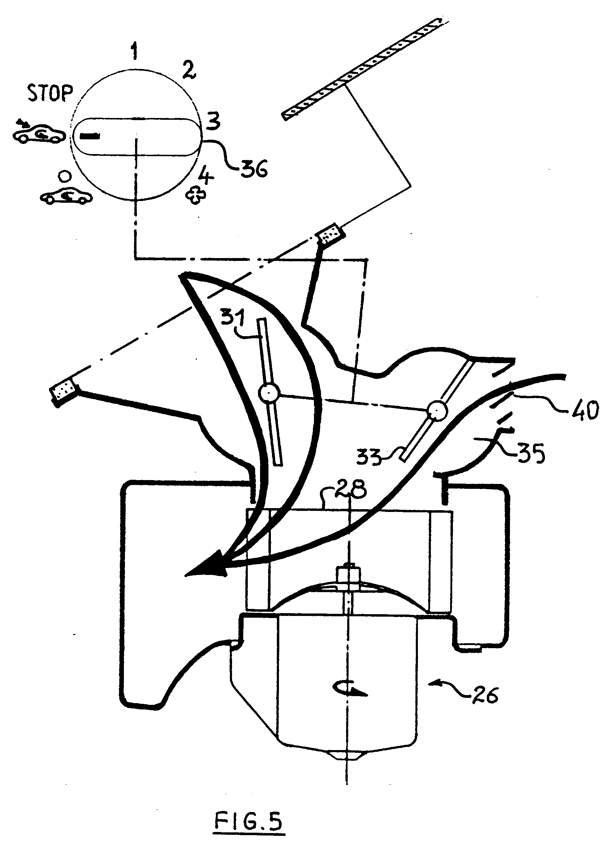

- la figure 5 est une vue en coupe partielle du dispositif d'admission de l'air de chauffage et de ventilation avec admission de l'air extérieur et de l'air recycle sans risque d'embuage de la face interne du vitrage sous pression dynamique faible générée par l'avancement du vehicule à vitesse réduite.

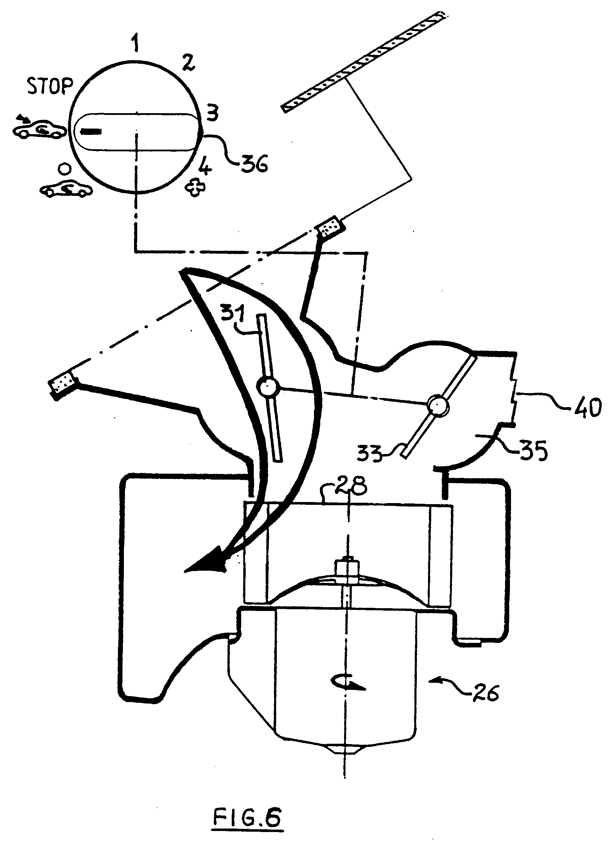

- La figure 6 est une vue en coupe du dispositif d'admission de l'air de chauffage et de ventilation sous pression dynamique générée par l'avancement du vehicule à grande vitesse.

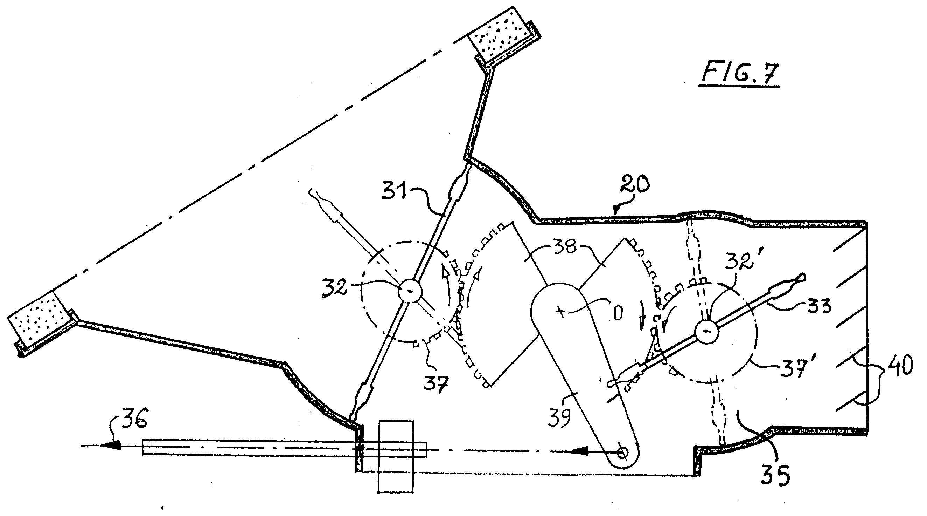

- La figure 7 est une vue en coupe écorchée du dispositif d'admission de l'air de chauffage et de ventilation qui montre le mécanisme de commande dudit dispositif.

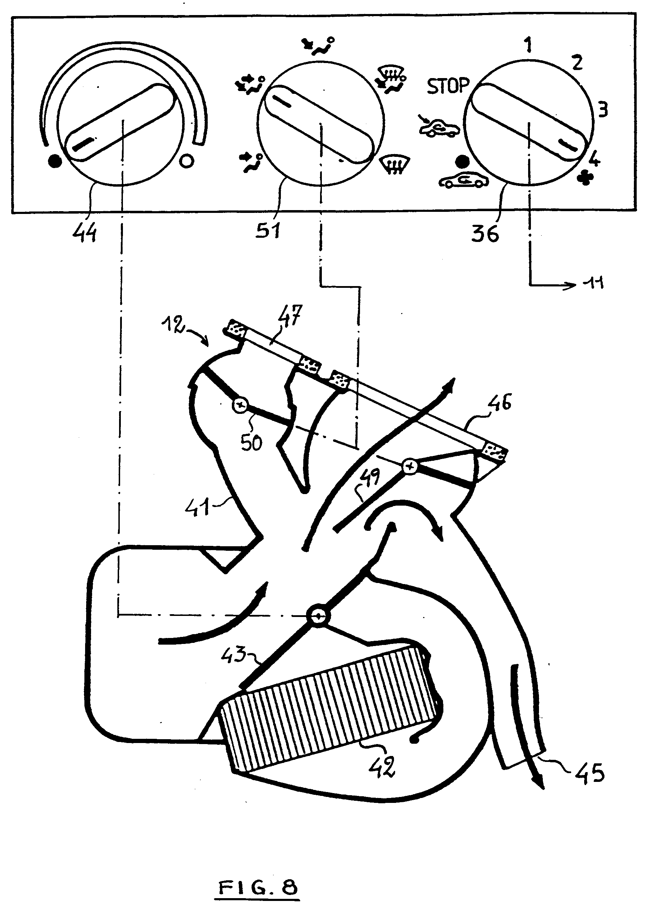

- La figure 8 est une représentation schématique en coupe du dispositif distributeur d'air.

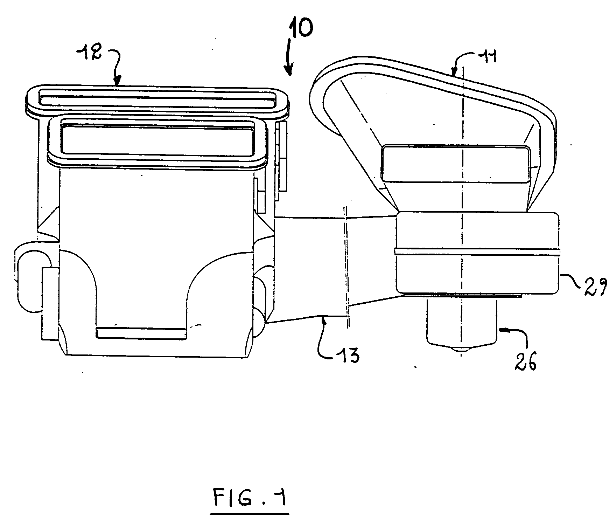

On a représenté à la figure 1 une vue d'ensemble du dispositif de chauffage et de ventilation 10 constitue par un ensemble 11 d'admission de l'air de chauffage et de ventilation, un ensemble 12 distributeur de l'air de chauffage et de ventilation et une gaine d'alimentation 13 raccordée par ses extrémités respectivement aux ensembles 11, 12.

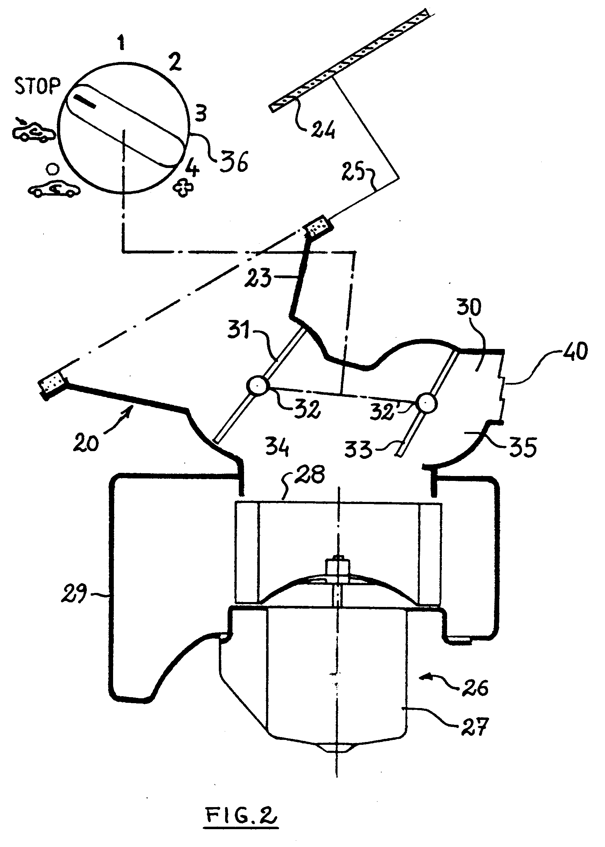

On décrira ci-après en référence des figures 2 et 8 successivement les ensembles d'admission 11 et distributeur 12.

### Disposition d'admission de l'air de chauffage et de ventilation

L'ensemble 11 représenté à la figure 2 est contenu dans un boîtier 20 mélangeur d'air. Celui ci peut être forme par deux coquilles raccordées par un plan de joint.

Le boîtier 20 possède une embouchure 23 d'entrée de l'air frais provenant de l'extérieur du vehicule et qui pénètre dans le boîtier 20 à la base du pare-brise 24 dans une zone ou règne une pression aérodynamique au cours de l'avancement du véhicule.

A cet effet l'embouchure 23 est raccordée à la paroi d'une gouttière 25 qui s'étend transversalement à la base du pare-brise 24.

Le boîtier 20 possède également une ouverture de montage d'un groupe moto-ventilateur 26.

Le groupe moto-ventilateur 26 a pour but de provoquer la circulation forcée de l'air dans le boîtier 20 en direction de l'ensemble distributeur 12.

Le groupe moto-ventilateur est ici constitue par un moteur électrique 27 à plusieurs vitesses et par un ventilateur centrifuge 28 monté dans une volute 29 rapportée à la base du boîtier 20.

Le boîtier 20 porte également les moyens de recyclage de l'air de l'habitacle.

Dans ce but, l'air de l'habitacle pénètre dans le boîtier par une entrée 30.

Selon une caractéristique de l'invention, le boîtier 20 contient :
- un volet d'admission 31 de l'air extérieur monté à proximité de l'embouchure 23 susceptible de pivoter autour d'un axe 32,
- un volet de recyclage 33 de l'air de l'habitacle, monté à proximité de l'entrée 30 et susceptible de pivoter autour d'un axe 32'.
- des clapets anti-retour 40 disposés à l'entrée d'une chambre 35 d'admission de l'air de l'habitacle.

Les volets 31, 33 sont respectivement disposés dans des chambres 34, 35 mises en communication avec la volute 29.

Selon une autre caractéristique de l'invention les volets 31, 33 sont commandés à distance à partir d'un organe de manoeuvre 36 disposé sur la planche de bord du véhicule dont le mode d'actionnement est décrit en référence à la figure 7.

A cet effet les axes 32, 32' de rotation des volets 31, 33 portent respectivement une roue dentée 37, 37' en prise avec deux secteurs dentés 38 portés par un même levier 39 monté à rotation autour d'un axe 0 parallèle aux axes des volets 31, 33. L'ensemble desdits axes étant lui-même porté par le boîtier 20.

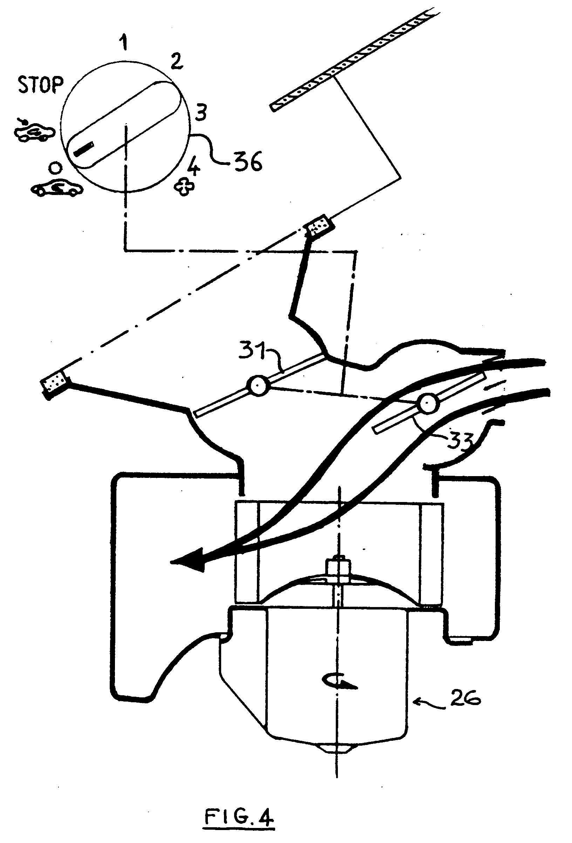

Selon une caractéristique de l'invention, la commande d'ouverture du volet de recyclage 33 est représentée à la figure 4 et 5 et correspond à une position particulière de l'organe de manoeuvre 36 en rapport avec laquelle, le ventilateur 28 est mis en rotation à une vitesse réduite.

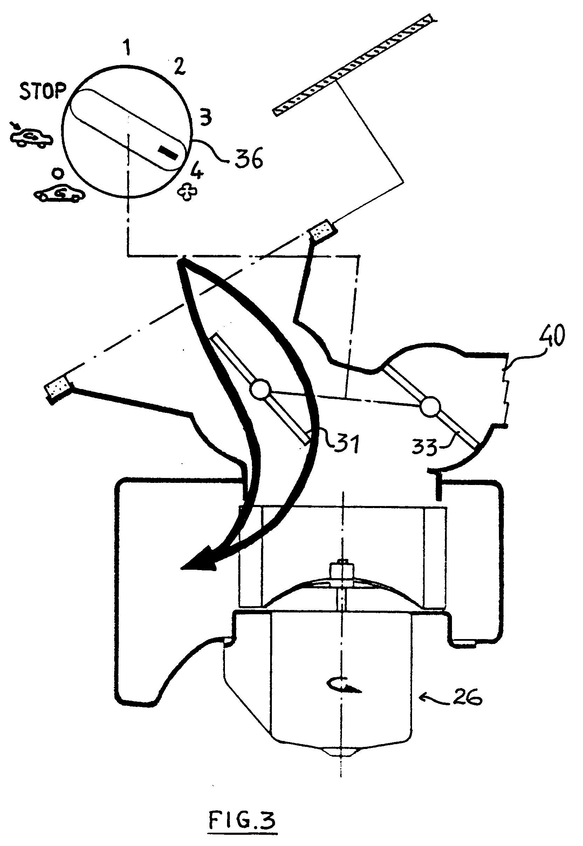

La combinaison des volets 31, 33 et du dispositif de commande incluant l'organe de manoeuvre 36 permet l'asservissement des positions relatives des volets 31, 33 qui assure notamment :
- l'ouverture du volet d'admission 31, lorsque le volet de recyclage 33 est fermé conformément à la figure 3, dans le but de permettre l'aspiration d'un flux d'air extérieur maximal,
- l'ouverture du volet de recyclage 33, lorsque le volet d'admission 31 est fermé conformément à la figure 4, dans le but de permettre le recyclage complet de l'air de l'habitacle.
- l'ouverture des volets d'admission 31 et de recyclage 33 dans le but de favoriser simultanément :
   l'entrée de l'air extérieur (60 % environ) sous une pression dynamique faible générée par une vitesse d'avancement modérée du vehicule,
   l'entrée de l'air de l'habitacle pour recycler l'air de l'habitacle afin de permettre une montée progressive de la température de l'habitacle sans risque de dépôts de buée sur la face interne du vitrage, conformément à la figure 5.
- l'ouverture des volets d'admission 31 et de recyclage 33 dans le but de favoriser simultanément :
   l'entrée de l'air extérieur (60 % environ) sous une pression dynamique forte générée par l'avancement à grande vitesse du vehicule.
   la fermeture des clapets 40 sous l'effet de la pression dynamique, conformément à la figure 6.

Selon une autre caracteristique de l'invention, la commande de débit du moto-ventilateur 26 est associée aux diverses positions de l'organe de manoeuvre 36 et du volet d'admission 31.

Ainsi par exemple la vitesse du groupe moto-ventilateur 26 est réduite en correspondance avec l'ouverture complète du volet de recyclage 33 tandis que le volet d'admission est fermé.

Les différentes vitesses du groupe moto-ventilateur sont également définies à partir d'une variation de sa tension d'alimentation en correspondance avec les positions de l'un et l'autre des volets 31, 33.

Dans le but d'éviter une introduction non désirée de l'air dans l'habitacle, au niveau du volet de recyclage 33, la chambre 35 est fermée par une grille à clapets 40 dont l'ouverture unidirectionnelle n'est possible qu'à la suite du recyclage de l'air de l'habitacle, lorsque le ventilateur 28 aspire l'air de l'habitacle. Par contre les clapets 40 interdisent la communication de l'air extérieur avec l'habitacle lors de l'élévation de la pression dynamique consécutive à l'augmentation de la vitesse d'avancement du véhicule.

Selon une autre caractéristique du dispositif d'admission de l'air, la gaine 13 peut porter un dispositif de mesure de la pression dynamique P13 de l'air ou une sonde de température.

La pression P13 ou la température peuvent alors être comparées à la valeur de la température ou de la pression dynamique P31 exercée dans les chambres 34, 35 au cours de l'avancement du véhicule.

La valeur de la température ou de la pression différentielle P31- P13 permettra par exemple la délivrance d'un signal correcteur de la position des volets 31, 33 et de la tension de commande du moto-ventilateur 26.

### L'ensemble distributeur d'air

L'ensemble distributeur d'air représenté à la figure 8 possède de manière en soi connue, un boîtier en deux parties 41 dans lequel est disposé un échangeur de chaleur 42 pouvant être court-circuité par un volet de mixage 43 actionné par une commande 44 disposée dans l'habitacle du véhicule.

Le boîtier 41 porte en outre une sortie de chauffage ou de ventilation 45 des pieds des passagers du vehicule, une sortie de ventilation 46 et une sortie de désembuage 47 de la base du pare-brise.

Les flux d'air dans les sorties 46 et 47 sont respectivement réglés par des volets 49, 50 manoeuvrés ainsi que cela a été indiqué au cours de la description en référence de l'ensemble répartiteur de l'air de chauffage et de ventilation par une commande 51 disposée dans l'habitacle du véhicule.

Les commandes 44, 51 permettent ainsi que cela est bien connu, une distribution de l'air de ventilation ou de chauffage comme suit :
- ventilation par des aérateurs latéraux et central intégrés dans la planche de bord,
- distribution simultanée de l'air par les aérateurs latéraux et central et au niveau du plancher du vehicule,
- désembuage ou degivrage du pare-brise et des vitres latérales,
- distribution simultanée de l'air de désembuage et au niveau du plancher du vehicule,
- distribution de l'air au niveau du plancher du véhicule.

## Revendications

1. Dispositif d'admission de l'air de chauffage et de ventilation avec recyclage de l'air de l'habitacle d'un véhicule, du type comportant un boîtier (20) mélangeur de l'air, dans lequel est disposé un ventilateur (28) débitant un flux d'air dans une gaine (13) d'alimentation d'un distributeur d'air (12), un volet d'admission (31) de l'air extérieur et un volet de recyclage (33) de l'air de l'habitacle et dans lequel lesdits volets (31, 33) sont respectivement commandés à distance par une commande disposée dans l'habitacle, les volets d'admission et de recyclage (31, 33) étant à positions relatives asservies et disposés dans des chambres (34, 35) en communication avec une volute (29) du ventilateur (28), dans laquelle débouche la gaine d'alimentation (13) d'un boîtier(41) du distributeur d'air (12) de chauffage et de ventilation, caractérisé par le fait que la commande d'ouverture dudit volet de recyclage (33) actionne le ventilateur (28).

2. Dispositif selon la revendication 1, caractérisé par le fait que les positions de l'un et l'autre des volets d'admission et de recyclage (31, 33) sont définies en correspondance avec une variation de la tension d'alimentation du moto-ventilateur (26).

3. Dispositif d'admission de l'air selon l'une quelconque des revendications 1 ou 2, caractérisé par le fait que des clapets anti-retour (40) à ouverture unidirectionnelle, dans le sens d'une mise en communication de l'air recyclé de l'habitacle avec la chambre (35) du volet de recyclage (33), interdisent la communication de l'air extérieur avec l'habitacle lors de l'élévation de la pression dynamique consécutive à l'augmentation de la vitesse d'avancement du véhicule.

## Claims

1. An arrangement for the intake of heating and ventilation air with recycling of the air in the passenger compartment of a vehicle, of the type comprising an air mixer housing (20) in which there is disposed a fan (28) producing a flow of air in a conduit (13) for feeding an air distributor (12), an intake flap (31) for outside air and a recycling flap (33) for the air in the passenger compartment and in which said flaps (31, 33) are respectively remotely controlled by a control disposed in the passenger compartment, the intake and recycling flaps (31, 33) involving controlled relative positions and being disposed in chambers (34, 35) in communication with a casing (29) of the fan (28), into which opens the feed conduit (13) of a housing (41) of the heating and ventilation air distributor (12), characterised in that the control for opening said recycling flap (33) actuates the fan (28).

2. An arrangement according to claim 1 characterised in that the positions of the one and the other of the intake and recycling flaps (31, 33) are defined in correspondence with a variation in the feed voltage of the motor-fan unit (26).

3. An air intake arrangement according to either one of claims 1 and 2 characterised in that non-return flap members (40) with unidirectional opening in the direction of communicating the recycled air of the passenger compartment with the chamber (35) of the recycling flap (33) prevent communication of the outside air with the passenger compartment upon an increase in the dynamic pressure due to the increase in the speed of forward movement of the vehicle.

## Patentansprüche

1. Lufteinlaß für eine Fahrzeugheizungs- und Belüftungsvorrichtung mit Luftumwälzung, mit einem Luftmischgehäuse (20), in dem ein Ventilator (28) angeordnet ist, der einen Luftstrom in ein Rohr (13) zur Versorgung eines Luftverteilers (12) abgibt, ein Einlaßflügel (31) für Außenluft angeordnet ist und ein Umluftflügel (33) für die Luft im Fahrgastraum angeordnet ist, wobei die Flügel (31, 33) jeweils durch eine im Fahrgastraum angeordnete Fernbedienung gesteuert werden und die beiden Flügel (31, 33) gesteuerte Relativstellungen in Kammern (34, 35) einnehmen, die mit einem Spiralgehäuse (29) des Ventilators (28) in Verbindung stehen und in dem das Rohr (13) eines Gehäuses (41) des Verteilers (12) in die Heiz- und Kühlluft mündet, dadurch gekennzeichnet, daR die Steuerung zur Öffnung des Umluftflügels (33) den Ventilator (28) betätigt.

2. Lufteinlaß nach Anspruch 1, dadurch gekennzeichnet, daß die Stellungen sowohl des Einlaßflügels als auch des Umluftflügels (31, 33) festgelegt sind in Übereinstimmung mit einer Veränderung der Speisespannung eines Bauteils (26) bestehend aus Motor und Ventilator.

3. Lufteinlaß nach einem der Ansprüche 1 oder 2, dadurch gekennzeichnet, daß Schließklappen (40) mit einer Öffnung in einer Richtung im Hinblick auf eine Herstellung einer Verbindung der umgewälzten Luft aus dem Fahrgastraum mit der Kammer (35) und dem Umluftflügel (33) den Eintritt von Außenluft in den Fahrgastraum verhindern, wenn eine Erhöhung des dynamischen Drucks als Folge einer Erhöhung der Fahrgeschwindigkeit des Fahrzeugs auftritt.
